# EUROPEAN PATENT APPLICATION

(11) **EP 4 421 447 A1**
(43) Date of publication of application: **28.08.2024**
(21) Application number: 23382167.7
(22) Date of filing: 23.02.2023
(51) Int. Cl.: G01C 11/02, G06T 7/73, G06T 7/579, G05D 1/02

(54) **METHOD FOR POSITIONING IMAGES WITHIN AN ARBITRARY 3D COORDINATE SYSTEM**

(71) Applicant: Floorfy S.L., 08001 Barcelona (Barcelona) (ES)
(72) Inventor: JIMÉNEZ BARBÉ, Sergi, 08001 Barcelona (ES); HERRERA GUARDIOLA, Dídac, 08001 Barcelona (ES); ROTGER MOLL, Gemma, 08001 Barcelona (ES); ALI, Sikander, 08001 Barcelona (ES); MARTIN BALLESTEROS, Xavier, 08001 Barcelona (ES)
(74) Representative: TRBL Intellectual Property

(57) **Abstract**

The invention provides a method for positioning a plurality of images, the method comprising the steps of providing an image acquisition device (8) and a control unit (6), performing a reference shot with the image acquisition device (8), performing a first main shot (1) with the image acquisition device (8), thus obtaining a first main image and performing a plurality of further main shots (2, 3, 4) with the image acquisition device. Each main shot is preceded by a plurality of corresponding secondary shots (5), in such a way every main image has a plurality of corresponding preceding secondary images. Then, sending the secondary images to the control unit (6) and using at least part of the secondary images by the control unit (6) to provide a location for the main images with respect to the position reference.

## Description

### TECHNICAL FIELD

The present invention relates to a system for capturing, positioning and referencing a series of images.

### STATE OF THE ART

Different systems for locating omnidirectional cameras within a map as a reference for scanning real estate are known, such as those described in documents US 10,303,979 B2, US 2020/364900 A1 or US 2019/250283 A1. These systems show different map referencing systems. These methods include, apart from the information obtained from the camera, other elements that allow its exact location.

The problem with this type of inventions is that, in case of misuse by the user in the positioning of the fiduciary elements, the positions can be incorrectly calculated and there is a possibility for the user to take some images which are not valid, and would need a repetition. In addition, image capture processes require the acquisition of a large number of high-resolution images, making the process slow and tedious for the user.

Other methods prior to the invention make use of added elements to the omnidirectional image capture, such as GPS sensors, fiduciary elements (QR codes), and/or direct three-dimensional measurement sensors. The invention presented in this document does not require any additional element for its correct operation.

### DESCRIPTION OF THE INVENTION

The invention provides an alternative solution for this problem by means of a method according to claim 1. Preferred embodiments of the invention are defined in dependent claims.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

In a first inventive aspect, the invention provides a method for positioning a plurality of images, the method comprising the steps of
providing an image acquisition device and a control unit;
performing a reference shot with the image acquisition device, thus obtaining a position reference;
performing a first main shot with the image acquisition device, thus obtaining a first main image, wherein the first main image is positioned with respect to the position reference;
performing a plurality of further main shots with the image acquisition device, thus obtaining a plurality of further main images, wherein each main shot is preceded by a plurality of corresponding secondary shots, in such a way every main image has a plurality of corresponding preceding secondary images;
sending the secondary images to the control unit; and
using at least part of the secondary images by the control unit to provide a location for the main images with respect to the position reference.

In this method, a plurality of main shots are taken, thus obtaining a plurality of main images, e.g., a first main image, a second main image, a third main image and a fourth main image. A reference shot is also taken, either before or after the first main shot. This reference shot may be simultaneous with the first main shot or with one of the secondary shots that will be described afterwards. Hence, there are different ways of providing the position of the first main image with respect to the reference image.

A plurality of secondary shots is taken before every main shot, so that every further main shot (i.e., every main shot except for the first one) is "connected" with the previous main shot by means of a plurality of secondary shots, which has been taken previously to the corresponding further main shot.

This method does not prevent the user from taking additional main shots that do not have the corresponding associated secondary shots. The key feature is that there is a plurality of relevant main shots that have secondary shots taken before them: a plurality of secondary shots between the first and second main shots, a plurality of secondary shots between the second and the third main shots and a plurality of secondary shots between the third and the fourth secondary shots. Apart from the main shots which comprise secondary shots between them, nothing prevents the user from taking further main shots just for the sake of reliability or any other reason. The fact is that the method defines the acquisition of several main shots and the acquisition of secondary shots before each one, regardless the user takes additional main shots without secondary shots between them.

The secondary shots will be used to provide a positioning for each of the further main images. The main images are not positioned by trying to find a correspondence with other main images, but by means of the secondary images, which provide a correspondence between consecutive main images even in the event that two consecutive main images are too far from each other. This is an advantage with respect to prior art methods, where two consecutive main images should share some elements so that the main images are positioned with respect to each other.

In some particular embodiments, the positioning of the first main image with respect to the position reference is done by acquiring a plurality of secondary images between the reference shot and the first main shot.

The method of the present invention may be used without limitation of the starting point and of the position reference. In some cases, the positioning of the first main image does not coincide with the reference shot: the reference shot is taken in a first location and the first main image is not taken immediately, but after a while. The camera may move several metres and even be located in a different room when the first main shot is taken. In these cases, the plurality of secondary images is useful to position the first main image with respect to the reference shot.

In different particular embodiments, the positioning of the first main image with respect to the position reference is done by taking the first main shot next to the reference shot, so that the first main image and the reference image share common elements.

As has been previously indicated, the method may be used without limitation of the starting point and of the position reference. In these cases, the position reference may be close to the first main shot (hence, close to the first main image), so that the first main shot and the reference image share enough points to identify the position of the main image with respect to the reference image. The concept of "next" or "close" just means that there both images share enough points to identify the position of the main image with respect to the reference image. This can be done, e.g., by taking the first main image with the image acquisition device in the same position as the acquisition of the reference shot.

In other cases, the reference image is taken well before the first main image so that there is a plurality of secondary images taken between this reference shot and the first main shot which is used to position the main image with respect to the position reference.

In some particular embodiments, the resolution of the secondary images is lower than the resolution of the main images.

When the resolution of the secondary images is lower than the resolution of the main images, a high number of secondary images can be processed without a high computer cost, thus improving the positioning of the main images. The greater the number of secondary images, the greater the certainty of positioning the main images.

In some particular embodiments, the image acquisition device is a 360° camera.

A 360° camera allows the user to take an omnidirectional image with a single shot.

In some particular embodiments, the step of performing a plurality of secondary shots with the image acquisition device is carried out by performing a stream and selecting some frames of the stream which become the secondary images.

A stream can be ordered in the vast majority of the image acquisition devices. The control unit or any other automatic rule may select relevant frames of the stream, thus becoming the secondary images.

In some particular embodiments, the image acquisition device is configured to acquire a preview dataset and the stream comprises images of the preview.

Some image acquisition devices have a functionality which allows the device to obtain a preview. This preview is composed of camera live images, continuously and directly capturing what the camera views in real-time or quasi real-time. Advantageously, the preview provides information which can be easily treated as the stream: key frames may be extracted from the preview to become the secondary images.

In some particular embodiments, the method comprises the steps of performing at least one secondary shot per second.

One secondary shot per second is enough for the vast majority of cases to create the necessary number of secondary images to position the next main image with respect to the position reference.

In some particular embodiments, the step of providing a location for the main images with respect to the position reference comprises the following substeps:
selecting part of the secondary images and comparing relevant points of each secondary image and finding first coincidences;
use the first coincidences to create a point cloud;
using at least part of the secondary images by the control unit to provide a location for the image acquisition device with respect to the position reference.

With this specific algorithm, the point cloud is created, and, by using the data from the secondary images, the image acquisition device may be positioned with respect to the reference position. Therefore, the position of the camera in the time when the main images are taken is perfectly known with respect to the position reference.

In some particular embodiments, the method further comprises the steps of
comparing relevant points of each main image with the point cloud and finding second coincidences; and
positioning each main image in the point cloud with the second coincidences.

With these additional steps, the reliability of the method is improved, since the position of the main images, which can be provided by the secondary images, is also checked with the second coincidences with the point cloud.

In some particular embodiments, each main image contains pixels, and the method further comprises the steps of
processing each main image to obtain depth information for at least some pixels, wherein the depth information contains a metric scale;
matching some points of the point cloud with the depth information to provide a metric scale to the point cloud.

In this case, not only are the main images positioned with respect to each other, but the point cloud where the main images are inserted is provided with a scale, provided by the depth information obtained for each main image.

In some particular embodiments, the step of sending the secondary images to the control unit is carried out in real time.

The secondary images are used to provide the necessary data to calculate the location of the main images with respect to the position reference. Hence, they need to be sent to the control unit, but this sending operation may be performed at any time. However, when this operation is made in real time, the control unit has the ability to detect if the connection is lost. This "real time" connection does not have to be an immediate connection, but just that the images are sent within 1 second from being captured, so that the control unit may detect a connection loss rapidly enough to warn the user to re-position the image acquisition device in the last known position.

In a further inventive aspect, the invention provides a system for performing the operations of a method according to the first inventive aspect, the system comprising
an image acquisition device configured for performing a reference shot, a plurality of main shots and a plurality of secondary shots;
a control unit configured to perform the steps of receiving images and configured to provide a location for the further main images with respect to the position reference by using at least part of the secondary images.

In some particular embodiments, the system further comprises a mobile device, wherein the control unit is comprised in the mobile device.

The control unit may receive the images by any means, including a physical connection or a wireless connection. Hence, the control unit may be located in a separate mobile device, such as a mobile phone or a tablet.

### BRIEF DESCRIPTION OF THE DRAWINGS

To complete the description and in order to provide for a better understanding of the invention, a set of drawings is presented. The forenamed drawings form an integral part of the description and illustrate an embodiment of the invention, which should not be interpreted as restricting the scope of the invention, but just as an example of how the invention can be carried out. The drawings comprise the following figures:
Figure 1 shows a system to be used in a method according to the invention.
Figure 2 shows a user moving the camera in some steps of a method according to the invention.
Figure 3 shows further steps of a method according to the invention.
Figure 4 shows an example of a plan view of the evolution of the camera in a method according to the invention.

In these figures, the following reference numbers have been used:
- 1: Location of the first main image
- 2: Location of the second main image
- 3: Location of the third main image
- 4: Location of the fourth main image
- 5: Location of a secondary image
- 6: Control unit
- 7: User
- 8: Camera

### DETAILED DESCRIPTION OF THE INVENTION

The exemplary embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. There is no intent to limit the scope of protection to the particular disclosed forms. On the contrary, all modifications, equivalents, and alternatives falling within the scope of the appended claims should be included. Elements of the example embodiments are consistently denoted by the same reference numerals throughout the drawings and detailed description where appropriate.

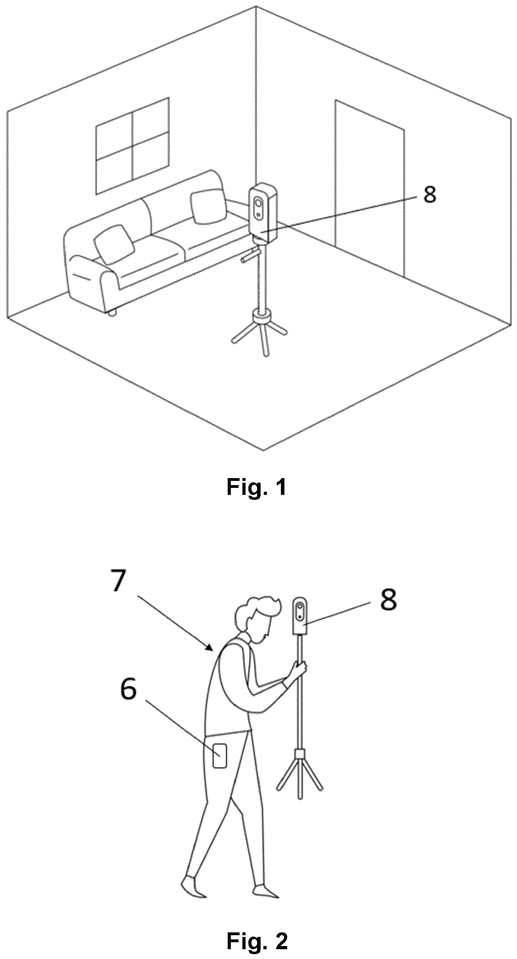

Figure 1 shows a system to be used in a method according to the invention. This system comprises a 360° camera 8 and a control unit comprised in a mobile device.

The 360° camera 8 is configured to perform main shots with a first resolution and a stream of previews with a second resolution lower than the first resolution. This 360° camera 8 has means for sending information to the control unit. This means can be wireless means of any type, and will normally be a connection via the internet.

The first step of this method involves a reference shot. This reference shot may be simultaneous to the first main shot or may be performed as an independent action.

In this case, the reference shot is taken just before the main image. Therefore, the main image will be perfectly referenced with respect to the reference position, since the camera 8 has not moved from the reference shot to the first main shot.

The main shot is a complete 360° image with the first resolution. This first image, as shown in this figure, can be, for example, a 360° image of the living room of a house, or of a main space of an office.

The reference shot is a standard image, while all the main shots are 360° images. However, this is not a problem for referencing the first main shot, which has a wide range of information, with the reference image, which has a more reduced field of view, but has enough information to create this position reference.

In other embodiments, the reference shot is taken as an independent action well before the first main shot. In these cases, the reference shot will be treated as a main shot, and the corresponding stream will be started to be able to provide a position for the first main shot with respect to the reference shot.

Once the main shot is taken, the stream is started by the 360° camera 8. This stream will contain a plurality of images (which do not need to be 360° images). From this stream, some relevant images will be stored; e.g., images with a frequency enough that two consecutive secondary images share a sufficient number of coincident points to identify the position of the user with respect to the position reference.

Figure 2 shows a user 7 which is moving the camera from the point where the first main image has been taken to a place where a second main image is going to be acquired. This user carries the mobile phone with the control unit 6.

During all the time the camera 8 is being moved, it is acquiring the images for the stream, and the relevant secondary images are sent to the control unit which is located in the mobile phone of the user.

The control unit receives the relevant secondary images and creates a point cloud using the coincidences between the secondary images. With this process, the control unit knows where the camera is with respect to the position reference while it is being moved.

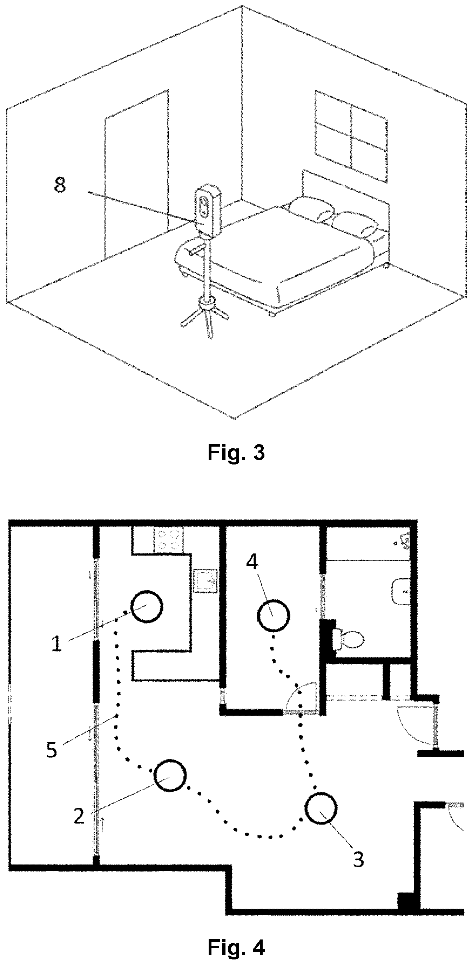

Figure 3 shows the user that has arrived at a different room and sets the camera 8 for the second main image. Due to the process carried out by the control unit, the second main image can be perfectly positioned with respect to the position reference at the same moment that is acquired.

This process can be repeated with any number of main images. The camera 8 is capturing a stream of images so that the control unit knows perfectly where the camera is with respect to the reference position with the point cloud information that is created from the secondary images which are received. Hence, when a main image is taken, it is immediately positioned with respect to the reference points.

Figure 4 shows an example of a plan view of the evolution of the camera in a method according to the invention.

In this figure, the camera has taken four main images and a stream containing a plurality of secondary images. The location where the camera has taken the first images 1, 2, 3, 4 is shown by circles in the figure. Further, the location corresponding to the secondary images is shown by small dots 5 in the figure. Although the camera is taking a stream, only some of the frames of the stream become secondary images, since there is no need of further data storing to identify the location of the camera.

In a further example of the method, a real metric scale can be provided to this plan, so that real dimensions between objects can be ascertained.

To this end, each main image is processed by the control unit to obtain depth information for at least some pixels of each image. This processing can be done by a machine learning algorithm, which is trained with images of interior spaces to recognize the depth of some points. Once this depth information is provided to some points of the main images, the position information regarding these images is in metric scale.

The next step is matching some points of the point cloud with the corresponding points of the main images, which contain depth information. Hence, the metric information is "transferred" to the point cloud, and then, the whole point cloud contains this scale information.

## Claims

1. Method for positioning a plurality of images, the method comprising the steps of
providing an image acquisition device (8) and a control unit (6);
performing a reference shot with the image acquisition device (8), thus obtaining a position reference;
performing a first main shot (1) with the image acquisition device (8), thus obtaining a first main image, wherein the first main image is positioned with respect to the position reference;
performing a plurality of further main shots (2, 3, 4) with the image acquisition device, thus obtaining a plurality of further main images, wherein each main shot is preceded by a plurality of corresponding secondary shots (5), in such a way every main image has a plurality of corresponding preceding secondary images;
sending the secondary images to the control unit (6); and
using at least part of the secondary images by the control unit (6) to provide a location for the main images with respect to the position reference.

2. Method according to claim 1, wherein the positioning of the first main image with respect to the position reference is done by acquiring a plurality of secondary images (5) between the reference shot and the first main shot.

3. Method according to claim 1, wherein the positioning of the first main image with respect to the position reference is done by taking the first main shot (1) next to the reference shot so that the main image and the reference image share common elements.

4. Method according to any of the preceding claims, wherein the resolution of the secondary images is lower than the resolution of the main images.

5. Method according to any of the preceding claims, wherein the image acquisition device (8) is a 360° camera.

6. Method according to any of the preceding claims, wherein the step of performing a plurality of secondary shots with the image acquisition device is carried out by performing a stream and selecting some frames of the stream, wherein the selected frames become the secondary images.

7. Method according to claim 6, wherein the image acquisition device is configured to acquire a preview dataset and the stream comprises images of the preview.

8. Method according to any of the preceding claims, wherein the method comprises the steps of performing at least one secondary shot per second.

9. Method according to any of the preceding claims, wherein the step of providing a location for the main images with respect to the position reference comprises the following substeps:
selecting part of the secondary images and comparing relevant points of each secondary image and finding first coincidences;
use the first coincidences to create a point cloud; and
using at least part of the secondary images by the control unit to provide a location for the image acquisition device with respect to the position reference.

10. Method according to claim 9, further comprising the steps of
comparing relevant points of each main images with the point cloud and finding second coincidences; and
positioning each main image in the point cloud with the second coincidences.

11. Method according to claim 10, wherein each main image contains pixels and the method further comprises the steps of
processing each main image to obtain depth information for at least some pixels, wherein the depth information contains a metric scale; and
matching some points of the point cloud with the depth information to provide a metric scale to the point cloud.

12. Method according to any of the preceding claims, wherein the step of sending the secondary images to the control unit (6) is carried out in real time.

13. System for performing the operations of a method according to any of the preceding claims, the system comprising
an image acquisition device (8) configured for performing a reference shot, a plurality of main shots and a plurality of secondary shots; and
a control unit (6) configured to perform the steps of receiving images and configured to provide a location for the further main images with respect to the position reference by using at least part of the secondary images.

14. System according to claim 13, further comprising a mobile device, wherein the control unit is comprised in the mobile device.
